Europäisches Patentamt

European Patent Office

Office européen des brevets

(19)

(11) Publication number: **0 592 544 B1**

## EUROPEAN PATENT SPECIFICATION

(12)

(45) Date of publication of patent specification: **27.09.95**  (51) Int. Cl.⁶: **B65D 81/00**, B65D 81/24

(21) Application number: **92914669.4**

(22) Date of filing: **02.07.92**

(86) International application number:
**PCT/US92/05624**

(87) International publication number:
**WO 93/01105 (21.01.93 93/03)**

(54) COFFEE FILTER PACK.

(30) Priority: **05.07.91 US 726429**
     **30.06.92 US 907761**

(43) Date of publication of application:
**20.04.94 Bulletin 94/16**

(45) Publication of the grant of the patent:
**27.09.95 Bulletin 95/39**

(84) Designated Contracting States:
**DE FR GB IT**

(56) References cited:
**WO-A-89/03653**
**FR-A- 1 575 181**
**FR-A- 2 270 161**
**US-A- 4 061 793**

(73) Proprietor: **THE PROCTER & GAMBLE COMPANY**
**One Procter & Gamble Plaza**
**Cincinnati,**
**Ohio 45202 (US)**

(72) Inventor: **GRUENBACHER, Dana, Paul**
**5982 Gilmore Drive**
**Fairfield, OH 45014 (US)**

(74) Representative: **Hirsch, Uwe Thomas et al**
**Procter & Gamble GmbH**
**Sulzbacher Strasse 40-50**
**D-65824 Schwalbach am Taunus (DE)**

EP 0 592 544 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.09/3.3.3)

## Description

FIELD OF THE INVENTION

This invention relates to low cost, high efficiency, disposable coffee filter packs to be used with most commercial drip coffee makers.

BACKGROUND OF THE INVENTION

A typical coffee brew machine comprises a base member with a heater element used to support a glass coffee pot and a coffee filter holder attached to the base in the position above the coffee pot. The coffee filter holder is typically frusto-conical in shape with one or more central apertures through the bottom wall and is designed to receive a disposable coffee filter. The coffee filter is normally fabricated from porous paper and is also frusto-conical in shape so as to be received within the coffee filter holder. In use, the coffee filter will be placed in the coffee filter holder and a measured amount of roast and ground coffee is placed in the bottom portion of the coffee filter. A measured quantity of hot water is then directed into the interior of the coffee filter onto the ground coffee. As the water passes through, the coffee expands and floats up in the filter increasing the coffee/water contact area. The water will then percolate through the ground coffee and flow through the bottom and lower side portions of the porous coffee filter and through the coffee filter holder apertures down into the coffee pot.

One disadvantage with the aforementioned system is that the ground coffee must be individually measured into the coffee filter each time a pot of coffee is to be brewed. This is time consuming and may result in too much or too little coffee being placed in the filter. If the amount of coffee placed in the filter varies to any significant extent, then the brew strength of the resultant coffee will also vary. Another disadvantage is that separate receptacles must be provided for the individual coffee filters and the ground coffee. Lastly, when measuring the coffee into the coffee filter or disposing of a used filter, the coffee is often spilled onto the counter area or the floor resulting in waste of coffee and a waste of time in cleaning up.

Coffee manufacturers have substantially eliminated the pot-to-pot brew strength inconsistencies arising from poor measurement of coffee by the operator by providing unitized pouches, each containing a predetermined volume of roast and ground coffee suitable for brewing a single pot of coffee of reasonably consistent strength from one pot to the next. However, these unitized pouches add to cost and disposal problems due to the need for additional packaging equipment and material. In addition, they do not eliminate the messiness problems normally associated with bulk coffee/paper filter systems, since loose grounds and filters must still be disposed of.

Recently, coffee filter packs have been designed in an attempt to overcome some disadvantages from this method. Most of these coffee filter packs are made with heat sealable filter paper or from non-woven polyester, polypropylene, polyethylene or a combination thereof. These materials are typically more expensive than conventional filter paper, which is typically comprised almost entirely of wood fiber. Moreover, these filter packs are usually circular or square in shape and simply cover the bottom wall of the coffee filter holder. One example of such a filter pack is disclosed in U.S. Patent 5,012,629 issued to Rehman on May 7, 1991. These filter packs are often improperly positioned in the coffee filter holder resulting in inconsistent brew strength from pot-to-pot, since their shape and materials of construction allow water to escape around the sides and through the coffee filter pack without sufficient exposure to all of the coffee contacted in the brew chamber of the filter pack. This results in poor coffee extraction. Furthermore, the coffee will often migrate to one side of the filter pack so that much of the water which does pass through the brew chamber of the filter pack does not contact any coffee. As a result, these filter packs produce brewed coffee with a relatively low level of extracted flavor solids as well as an inconsistent brew strength from pot-to-pot.

FR-A-1 575 181 discloses a coffee filter pack according to the preamble of claim 1. However without addressing the problem of substantially consistent brew strength from one pot of coffee to the next.

U.K. Patent Application GB 2,183,459 discloses yet another coffee filter pack having a pre-measured amount of ground coffee within a receptacle region or brew chamber. The receptacle region is defined by a pair of frusto-conical layers of porous filter paper mutually adhered to one another to form a substantially vertically extending sidewall. However, since the sidewall is constructed of initially porous paper material and there is no teaching of any need to render the sidewall substantially impervious to water to force all of the incoming water through the receptacle containing the ground coffee, it is believed that the filter pack disclosed in U.K. Patent Application GB 2,183,459 would not deliver any improvement in pot-to-pot brew strength consistency over the structure disclosed by Rehman.

Still other workers in the prior art have made a multi-component coffee filter pack having a frusto conical shaped side wall comprised of a rigid plastic material while the bottom portion of the pack comprises a coffee containing pouch which is made of porous material. The impermeable plastic side walls of the latter filter packs prevent water from escaping through the side walls and around the coffee containing porous pouch, thereby increasing at least the potential for coffee/water contact. Examples of devices using this concept are shown in U.K. Patent Application 2,156,662 and U.K. Patent 1,427,375. However, coffee filter packs of the latter type require careful and consistent placement on the coffee maker due to their rigid side walls and are generally quite expensive relative to the bulk coffee/filter paper systems they are intended to replace. Furthermore, some of these filter packs require that a new and expensive filter holder be attached to the coffee maker to permit their use.

Experience to date has been that filter packs of the prior art do much to overcome the messiness of the bulk coffee/filter paper systems they have replaced. Unfortunately, they have typically exhibited lower extraction efficiencies than the bulk coffee/filter paper systems. In addition they have typically introduced much worse pot-to-pot brew strength variation than bulk coffee systems using premeasured unitized pouches of roast and ground coffee in conjunction with paper filters. It is believed that these shortcomings of prior art coffee filter packs are due to a failure of prior art filter pack workers to recognize the importance of meeting certain previously undefined brewing parameters, which have for the first time been identified by applicants. For example, none of the foregoing references teach the importance of controlling the flow rates of liquids into and out of the brew chamber. By way of contrast, Applicant has learned that in order to minimize brew time, maximize flavor solids extraction and make a good pot of coffee, a substantial portion of the hot water directed into the filter pack must contact the coffee in the brew chamber after a substantially steady state brewing condition has been established within the brew chamber, i.e., after the brew chamber has been completely flooded with the incoming hot water so that the chamber expands to its maximum volume and allows substantially all of the coffee contained therein to loosely float within the chamber. Applicant has further learned that this is preferably done by providing a substantially water impermeable side wall having a height which is sufficient to retain at least enough water to permit complete immersion of the brew chamber when the brew chamber is in its fully expanded condition in combination with inlet and discharge flow rates into and out of the brew chamber that will cause the water to build up and puddle the coffee inside the brew chamber. If the water is not allowed to build up inside the brew chamber, as is typically the case with prior art filter packs, or if the coffee contained in the brew chamber of a prior art filter pack has shifted to one side of the brew chamber when the prior art filter pack is placed in the filter holder, the failure to properly control the inlet and outlet flow rates and the failure to provide a substantially water impermeable side wall having a height which is sufficient to retain at least enough water to completely immerse the brew chamber when the brew chamber is in its fully expanded condition will allow much of the water to flow directly through the brew chamber of the prior art filter pack without ever contacting any of the coffee.

In addition, applicants have learned that the brew chamber must be large enough to allow the roast and ground coffee room to expand and float while water is building up in the brew chamber in order to achieve sufficient coffee/water contact, i.e., to achieve a steady state brewing condition. This helps to prevent channeling of the water through the filter pack without sufficient coffee/water contact. Minimizing channeling is important, since channeling of the hot water directly through the brew chamber without sufficient coffee contact results in poor and inconsistent coffee flavor solids extraction.

It is therefore an object of the present invention to provide a coffee filter pack which overcomes many of the problems associated with the prior art brewing systems and which avoids the pot-to-pot brew strength inconsistency typically associated with prior art filter packs.

It is another object of the present invention to provide such a coffee filter pack which is relatively insensitive to operator placement within the filter holder of the coffee machine, which includes a substantially impermeable vertically oriented, conformable side wall, which is made almost entirely of relatively inexpensive flexible material, such as ordinary filter paper, and which can be used with a wide range of existing coffee filter holders without any need to modify them.

## SUMMARY OF THE INVENTION

The present invention achieves the desired results by providing a coffee filter pack of a generally frusto-conical shape, made of inexpensive flexible material, but having a substantially vertically extending conformable side wall which is substantially impermeable to water. In order for the hot brewing water to be in highly effective contact with the predetermined amount of coffee contained in the brew chamber as it passes therethrough, the brew chamber is constructed so that the flow rate of liquid into the brew chamber is greater than the flow rate of liquid out of the brew chamber. Furthermore the filter pack is preferably constructed so that the flow rate at which the coffee maker delivers the hot brewing water to the filter pack is equal to or less than the rate at which water passes into the brew chamber and greater than the rate at which brewed coffee flows out of the brew chamber.

The substantially water impermeable vertically extending continuous side wall of coffee filter packs of the present invention is comprised of flexible material so that it can automatically conform to the porous filter support means in the coffee maker regardless of how much care is exercised by the operator in placing the filter pack in the filter support means. The substantially water impermeable side wall must be high enough after placement of the filter pack in the filter support means to capture enough of the incoming hot brewing water so that a substantially steady state brewing condition is established within the brew chamber relatively early in the brewing cycle, i.e., a flooded condition in which the brew chamber has been expanded to substantially its maximum volume by the incoming hot water. In addition, the brew chamber of the filter pack must be large enough to allow the coffee to expand and loosely float within the flooded chamber in order to establish a substantially steady state brewing condition within the brew chamber. This means that the substantially water impermeable side wall of the filter pack must extend upwardly a vertical distance which is at least equal to the maximum vertical height which can be assumed the brew chamber in a fully flooded condition. Otherwise flooding of the brew chamber will not take place.

The higher the substantially water impermeable side wall extends above this minimum, the greater will be the filter pack's insensitivity to careless placement within the filter support means, since lack of perfect concentricity with the filter support means will not result in an inability to retain enough hot water to establish a flooded steady state brewing condition within the brew chamber.

As a practical matter, the vertical height of the substantially water impermeable side wall is greater than the foregoing minimum to prevent overflow of the incoming hot water from the coffee maker (recall that the discharge flow rate of brewed coffee from the brew chamber is normally less than the incoming flow rate of hot water to the filter pack to permit flooding of the brew chamber).

The maximum height of the substantially water impermeable side wall is, of course, limited by the vertical height of the filter support means used on the coffee makers which are to employ the filter packs in question. If the filter pack extends vertically beyond the uppermost edge of the filter support means, it is likely to cause interference when attaching the filter support means to the coffee maker.

A particularly preferred embodiment of the present invention uses two layers of inexpensive porous filter paper secured to one another about their perimeters with a hydrophobic adhesive coating. The adhesive coating can serve two purposes. First, it can act as an adhesive for bonding one layer of filter paper to the other in order to contain the coffee within a region, which is referred to herein as a brew chamber. Second, it can direct the brewing water through the mass of coffee by making the substantially vertically extending conformable side walls and a portion of the bottom of the brew chamber substantially impermeable to water. The maximum volume of the brew chamber formed between the unsecured portions of the two layers of filter paper is preferably between about 25 percent and about 300 percent greater than the volume of the dry roast and ground coffee contained therein to allow the coffee to expand and float within the chamber during steady state brewing conditions.

A hydrophobic adhesive which allows the use of relatively inexpensive non-heat seal able filter mediums, such as paper, mediums, is preferably employed to construct preferred embodiments of the present invention. This hydrophobic adhesive is preferably applied everywhere on the bottom layer of filter medium, except in a portion of the area coinciding with the brew chamber, where the flow of brewed coffee is desired. This, in essence, creates a funnel which not only permits flooding of the brew chamber with water, but which also directs the incoming hot brewing water through the brew chamber of the filter pack.

The porosity and size of the porous area of the bottom filter medium, where adhesive is not applied, controls the discharge flow rate of the brewed coffee out of the brew chamber of the filter pack. The porosity and size of that centrally located portion of the top filter medium which is not bonded to the bottom filter medium controls the flow rate of incoming hot water into the brew chamber until such time as the brew chamber becomes flooded. The rate at which water can thereafter enter the flooded brew chamber is controlled by the discharge flow rate of brewed coffee from the brew chamber.

The individual coffee maker being used determines the total volume of finished coffee product brewed in each batch and the flow rate of water delivered to the filter pack during the brewing cycle.

In some coffee makers, a portion of the hot water which ends up in the finished batch is deliberately routed so as to completely bypass the filter pack. In this situation, concentrated brewing of the coffee is carried out only by that portion of the hot water which is directed through the filter pack. The concentration of the brewed coffee exiting the filter pack is then diluted to the level desired by the consumer by the hot water which bypassed the filter pack when the coffee exiting the brew chamber is collected in the pot located beneath the filter support means. Systems of the aforementioned type are typically employed to reduce the overall cycle time required to brew a pot of coffee.

While the particular volume of the coffee batch to be brewed and the flow rate of the incoming hot water into the filter pack may vary somewhat from one machine manufacturer to another, thereby slightly altering the absolute brew strength of the coffee produced when one manufacturer's coffee maker is compared to another, for any given coffee maker coffee filter packs of the present invention will produce comparable extraction efficiencies when compared to bulk coffee/paper filter systems using identical brewing conditions and improved pot-to-pot brew strength consistency when compared to conventional coffee filter packs of the prior art.

## BRIEF DESCRIPTION OF THE DRAWINGS

Figure 1 is a simplified perspective view of a coffee filter pack of the present invention.

Figure 2 is a simplified, cross-sectional view taken along section line 2-2 of Figure 1.

Figure 2A is a simplified, cross-sectional view similar to that of Figure 2, but showing the filter pack in the filter support means of a coffee maker, said view showing the brew chamber of the filter pack in a fully expanded, steady state brewing condition.

Figure 3 is a flattened planar view of bottom layer 10 of the filter pack shown in Figure 1.

Figure 4A is a simplified perspective view of male die 60, female die 70, and a flat coffee filter pack of the type shown in Figure 1 prior to closure of the dies upon one another.

Figure 4B is a simplified perspective view of the male and female dies of Figure 4A in their closed position with the coffee filter pack shown in Figure 4A between them.

Figure 4C shows the formed coffee filter pack of Figure 1 as it is emerging from the female die shown in Figures 4A and 4B.

## DETAILED DESCRIPTION OF THE INVENTION

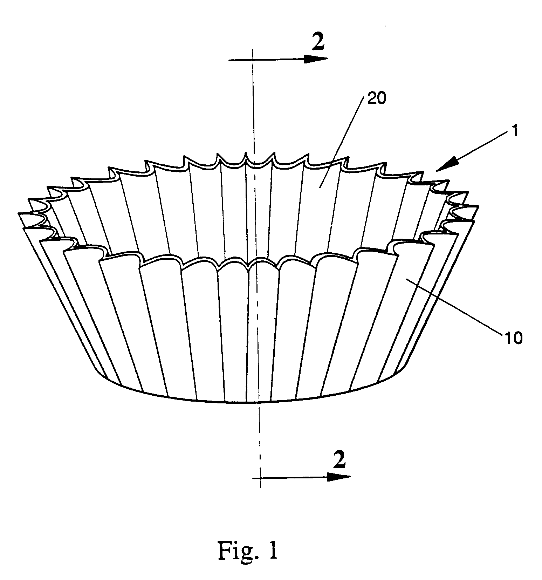

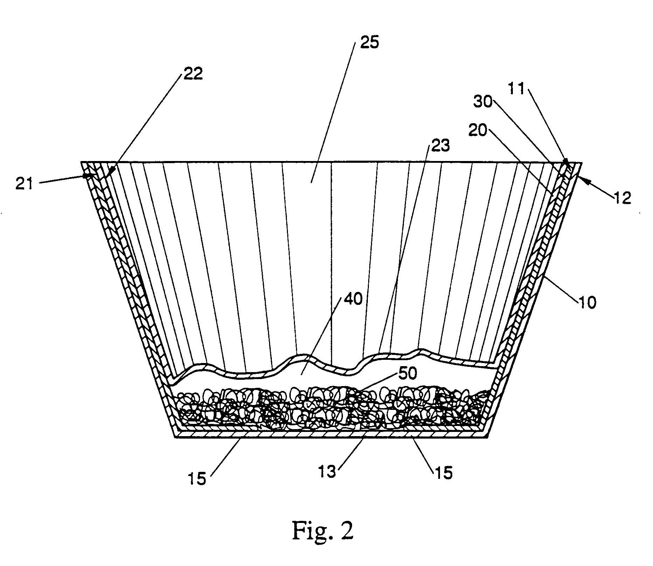

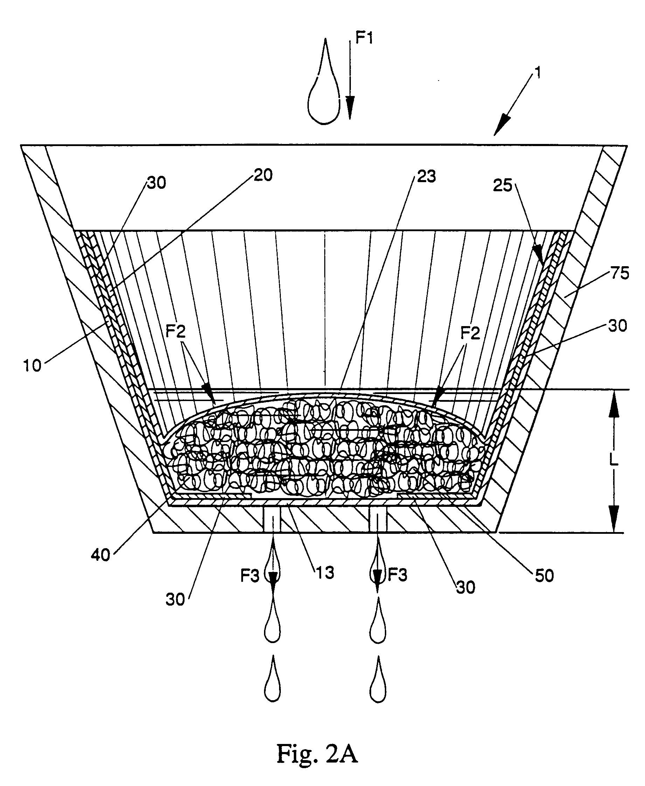

Figure 1 shows a preferred coffee filter pack 1 of the present invention. The preferred embodiment can best be described by looking at Figure 2 which is a simplified cross-sectional view taken along section line 2-2 of Figure 1. The coffee filter pack comprises a bottom layer 10 comprised of a flexible porous material and a top layer 20 also comprised of flexible porous material. The inner face 11 of bottom layer 10 is preferably joined to the inner face 21 of top layer 20 about its perimeter by a hydrophobic adhesive coating 30. The hydrophobic adhesive coating makes the porous layers substantially impervious to water wherever it is applied.

The combination of bottom layer 10 and hydrophobic adhesive 30 creates a flexible and conformable side wall 25 which is substantially impervious to water. Because the combination of bottom layer 10 and hydrophobic adhesive coating 30 together form a substantially water impermeable side wall, top layer 20 need not extend all the way to the outer perimeter of bottom layer 10 to render side wall 25 substantially impermeable to water. Alternatively, the bottom layer 10 could be smaller and the top layer 20 could be rendered water impermeable by coating its outer perimeter with a hydrophobic adhesive 30. Hydrophobic adhesive coating 30 is extended along the inner face 11 of bottom layer 10 to form an annular ring 15 which coincides with the interior of brew chamber 40, leaving an uncoated permeable circular area 13 at the center of bottom layer 10. The distance to which annular ring 15 extends into brew chamber 40 controls the permeable area 13 and hence the discharge flow rate at which brewed coffee is allowed to pass through the bottom layer 10. The water flow rate into brew chamber 40 is controlled by the area of the unsecured central portion 23 of top layer 20. Assuming layers 10 and 20 are comprised of similar material, controlling the size of the permeable areas on the top and bottom layers for a given porosity controls the relative flow rates of liquids through the layers.

The flow rates of liquids through the layers and the height of the substantially vertically extending moisture impervious side wall 25 are sized and configured n filter packs of the present invention so that a steady state brewing condition is established within brew chamber 40 during a substantial portion of the brewing cycle. As used herein, a steady state brewing condition is established within brew chamber 40 when the brew chamber's maximum volume $V_3$ is filled with water and roast and ground coffee 50, allowing the coffee to expand and loosely float within the chamber. This condition is illustrated in the cross-section of Figure 2A.

During build up to this steady state brewing condition, the flow rate $F_2$ of incoming hot water through the permeable region 23 of the top layer 20 should be greater than the maximum flow rate $F_3$ of brewed

coffee exiting through the permeable area 13 in bottom layer 10. Furthermore, the water delivery flow rate $F_1$ of the coffee maker to the filter pack 1 should be less than or equal to the incoming hot water flow rate $F_2$ into brew chamber 40. Once a steady state brewing condition is reached and water has built up to the level "L" in the filter pack, as shown in Figure 2A, flow rate $F_2$ will take on the value of flow rate $F_3$, which should still be less than flow rate $F_1$. As can be seen from Figure 2A, substantially water impermeable side wall 25 must be at least tall enough to capture enough of the incoming hot water that the brew chamber 40 will become flooded and fully expanded to achieve a steady state brewing condition. In the embodiment shown in Figure 2A, this minimum vertical side wall height corresponds to level "L", which represents the maximum possible vertical expansion of porous area 23 in brew chamber 40.

The higher the substantially water impermeable side wall 25 extends above this minimum, the greater will be the filter pack's insensitivity to careless placement within the filter support means 75, since lack of perfect concentricity with the filter support means will not result in an inability to retain enough hot water to establish a flooded steady state brewing condition within the brew chamber.

As a practical matter, the vertical height of the substantially water impermeable side wall 25 is greater than the foregoing minimum to prevent overflow of the incoming hot water from the coffee maker (recall that the discharge flow rate of brewed coffee from the brew chamber is normally less than the incoming flow rate of hot water to the filter pack to permit flooding of the brew chamber).

The maximum height of the substantially water impermeable side wall 25 is, of course, limited by the vertical height of the filter support means 75 used on the coffee makers which are to employ the filter packs in question. If the filter pack extends vertically beyond the uppermost edge of the filter support means 75, it is likely to cause interference when attaching the filter support means to the coffee maker.

Applicant has learned that the difference between the inlet flow rate $F_2$ of the incoming hot water and the maximum outlet flow rate of brewed coffee $F_3$ should be sufficiently great that steady state brewing condition, as shown in Figure 2A, is reached within the brew chamber 40 relatively early in the brewing cycle. Most preferably this condition is established before more than about 50 percent of the total volume $V_2$ of water to be passed from the coffee maker through the filter pack 1 has passed through the discharge outlet 13 in the bottom layer 10. Meeting this condition helps ensure that filter packs of the present invention will consistently extract about the same level of flavor solids from a predetermined volume $V_1$ of roast and ground coffee 50 as could be extracted from an identical volume $V_1$ of identical bulk roast and ground coffee brewed under identical conditions, but using a porous paper filter containing the bulk coffee in an unconstrained condition. Thus, unlike prior art coffee filter packs, coffee filter packs of the present invention deliver comparable brewing efficiency to bulk coffee/filter paper systems, but without the need for unitized pouches of premeasured coffee to ensure pot-to-pot brew strength consistency and without the mess associated with bulk coffee and paper filters.

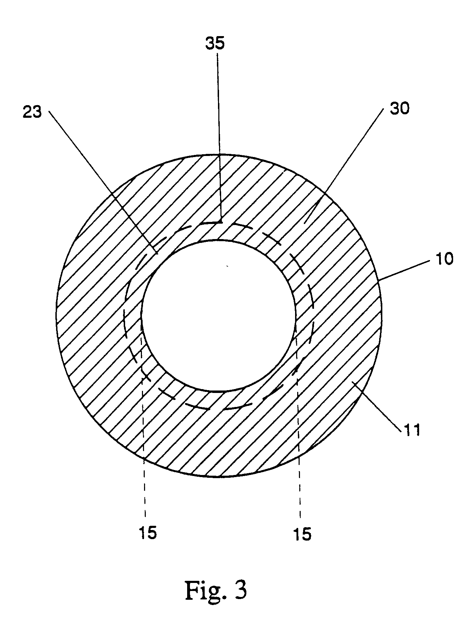

As shown in Figure 3, hydrophobic adhesive coating 30, which is preferably a hot melt, is applied in a ring like fashion around the perimeter of the inner face 11 of bottom layer 10, leaving an uncoated porous discharge outlet orifice 13 at the center of bottom layer 10. A predetermined amount of coffee 50 having a dry volume $V_1$ is placed within the area defined by dotted line 35 either before or at the same time as top layer 20 is superposed on bottom layer 10. Top layer 20 is then brought into contact with bottom layer 10 and heat and pressure are applied to only the outer perimeter of top layer 20, i.e., the area which lies outside dotted line 35 in Figure 3. This adheres the outer perimeter of top layer 20 to the outer perimeter of bottom layer 10. Accordingly, dotted line 35 shows the innermost point where the top layer 20 ceases to be adhered to bottom layer 10 and defines the inlet permeable inlet orifice 23 for entry of the incoming hot water into brew chamber 40. Dotted line 35 also defines the outermost circumference of brew chamber 40.

As can be discerned from Figure 3, the surface area of the inlet orifice 23 to the brew chamber 40 is larger than the surface area of the discharge outlet orifice 13 out of the brew chamber. For any given porosity of the top and bottom layers this will make the flow rate into the chamber greater than the maximum flow rate out of the chamber during build-up to a steady state brewing condition. This difference in flow rates in combination with the impermeable side walls of the filter pack 1 causes the incoming hot water to build up and puddle inside the brew chamber 40 in the manner generally shown in Figure 2A. This permits the coffee/water exposure and contact time needed to obtain a desired brew strength for a predetermined amount of coffee. Also, allowing water to build up causes the particles of coffee 50 to loosely float and expand inside the brew chamber 40. This minimizes channeling of the hot water directly through the chamber without sufficient coffee contact, thereby increasing the efficiency of coffee flavor solids extraction and reducing extraction variability from pot-to-pot.

Besides having sufficient coffee/water contact time, Applicant has learned that sufficient coffee/water contact area must be provided in order for a predetermined amount of coffee to consistently produce a desired brew strength, i.e., the coffee must not be tightly constrained or it cannot float and establish a steady state brewing condition. Brew chamber 40 should be large enough to encase the desired amount of coffee 50 and to allow the coffee to expand and loosely float when the chamber is flooded, i.e., during steady state brewing conditions, as generally shown in Figure 2A. Ideally the maximum volume $V_3$ of brew chamber 40 is between about 25 percent and about 300% larger than the dry coffee volume $V_1$. This condition is illustrated in the cross-section of Figure 2.

The filter pack 1 preferably exhibits a frusto-conical shape, as generally shown in Figure 1, so that even if the operator is careless in installing it in the filter support means or holder 75, the filter pack's shape and the conformability of its side wall 25 will tend to automatically self align the filter pack to produce a situation similar to that shown in Figure 2A, so that the desired funnel effect takes place during the brew cycle.

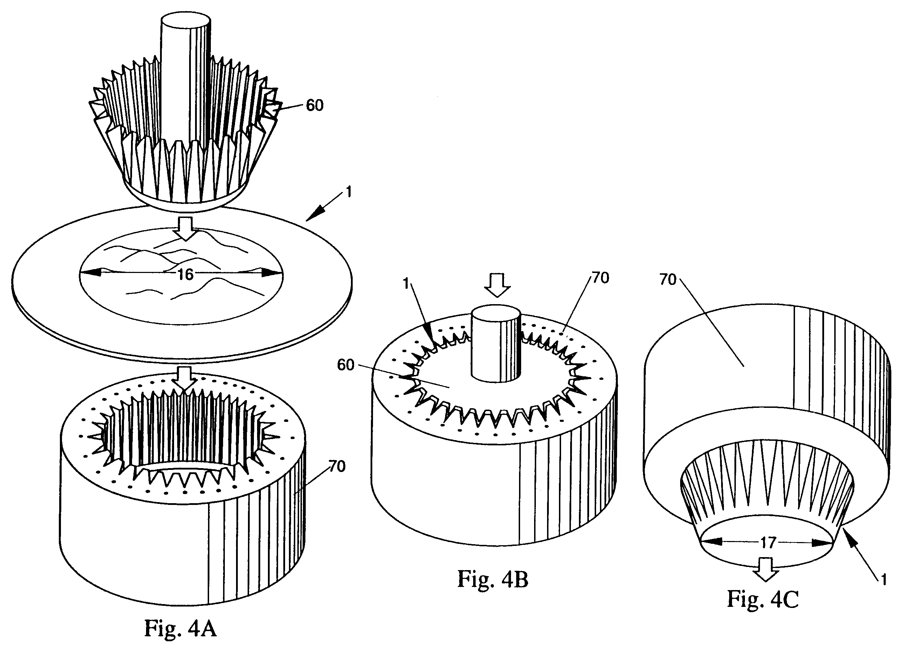

The process of imparting the frusto-conical shape can best be explained by looking at Figures 4A, 4B and 4C. A fully assembled planar filter pack 1 is placed between female die 70 and male die 60 so as to take on the desired shape as shown in Figure 1. The unformed diameter 16 shown in Figure 4A is larger than the formed diameter 17 shown in Figure 4C. As can be seen from Figure 2A, the formed diameter 17 is ideally the same diameter as the bottom of the coffee filter holder 75 of the coffee maker.

The foregoing forming process causes the unadhered porous inlet portion 23 of top layer 20, to puff up and create a large enough brew chamber 40 to achieve good coffee extraction, as shown in Figures 2 and 2A. While the substantially water impermeable conformable side wall 25 ensures that the hot water needed for flooding of the brew chamber will be available no matter how sloppily the filter pack 1 is placed in the filter holder 75. Thus, unlike filter packs of the prior art, the present invention is relatively insensitive to operator error.

The bottom and top layers used in filter packs of the present invention can be comprised of any paper, synthetic non-woven, or plastic material that has a porosity and mesh size capable of preventing substantially all of the coffee particles from entering into the brewed coffee beverage or sifting out while handling the disposable filter pack before or after brewing.

In a particularly preferred embodiment, both layers are comprised of filter paper comprised substantially entirely of wood fiber. This is the type of filter paper normally used to make conventional coffee filters.

The adhesive used to seal and secure the inner and outer layers to one another is preferably comprised of a hydrophobic hot melt material applied as a continuous layer, e.g., a polymeric material, such as polypropylene, applied with a rotogravure, screen, or spray coating system. The particular hydrophobic adhesive material employed should, of course, be approved for direct contact with food and beverage substances and boiling water. The adhesive ideally has a viscosity of between about 500 and about 15,000 CPS at 350°F for coating application purposes. The adhesive should also have a softening temperature greater than 180°F in order that the seal between the filter mediums employed in the filter pack 1 does not fail in hot water during brewing. The thickness of the hydrophobic adhesive can be adjusted, as desired, to provide the desired seal strength and degree of water imperviousness. The thickness of the adhesive can also be varied within the different portions of the filter pack to achieve different objectives. For instance, a thickness of 0.5 mils of adhesive may be sufficient to render the conformable side wall 25 of the filter pack substantially impervious to liquid, while a 1 mil thickness of adhesive may be needed to create sufficient seal strength.

In yet another embodiment of the present invention, a die cut layer of polymeric material, such as polyethylene could be substituted for layer of hydrophobic adhesive 30. This causes the filter pack to be substantially impermeable to water wherever the polyethylene is present. The three layers of the resultant laminate could, of course, be adhered to one another by applying sufficient heat to soften the polyethylene. The resultant laminate coffee filter pack would behave identically to the embodiment shown in Figures 1 and 2.

In still another embodiment of the present invention, the flow rates $F_2$ and $F_3$ through brew chamber 40 could be controlled by making the porous portion 13 of bottom layer 10 less porous than the porous portion 23 of top layer 20. This is usually achieved by making the bottom layer 10 slightly thicker than the top layer 20. In an embodiment of the latter type, the hydrophobic adhesive 30 would not need to extend inwardly beyond dotted line 35 in Figure 3, since the difference in porosity of the layers would produce a difference in flow rates even if their respective areas were identical in size.

In yet another embodiment of the present invention the layers 10 and 20 could be comprised of a synthetic non-woven material containing hundreds of tiny plastic fibers packed close enough together to prevent ground coffee particles from entering the brewed beverage or escaping from the brew chamber, while still allowing water to pass therethrough. Materials of the latter type can be rendered impervious in selected regions by selectively applying heat and pressure to melt the discrete fibers together, thereby creating a thin film of plastic that is substantially water impervious. Heat and pressure could be used to adhere the two layers employed to construct the coffee filter pack to one another in the same areas shown in Figures 1, 2 and 3.

In still another embodiment of the present invention, the layers of the filter pack can be comprised of a continuous film of plastic or polymeric material, such as polyethylene, that is initially water impermeable. Water permeable regions can then be made by puncturing the plastic material and making hole sizes which are large enough to let water pass yet small enough to prevent the passage of substantially all of the solid coffee particles in the brewing chamber. This puncturing could, if desired, be done by a water jet process of the type generally described in commonly assigned U.S. Patents 4,695,422 issued to Curro et al. on September 22, 1987 and 4,609,518 issued to Curro et al. on September 2, 1986 both disclosures of which are hereby incorporated herein by reference. Alternatively, a mechanical punching process could be employed to perforate the film. Other suitable perforated films are commercially available from Tredegar Industries, Film products Division, Terra Haute, Ind.

The size and number of holes could be varied to control flow rates through the filter pack. For example, more holes could be provided on the top layer than on the bottom layer so as to make the bottom layer less porous. Furthermore, the holes could be of identical size and density in both layers and the flow areas adjusted in the same manner shown in Figures 1, 2 and 3 so as to control liquid flow rates into and out of the brew chamber in a similar fashion. That is the size of the porous inlet orifice and porous outlet orifices could be varied. No holes would be placed in the side wall portion of the filter pack so as to keep them substantially impermeable to water.

Many of the plastic sheets described above are made in rolls or sheets of plastic film that are apertured or water permeable continuously throughout. Therefore, in order to make the filter pack of the present invention with continuously apertured film, the top and bottom layers should be secured together and made impermeable around the region corresponding to the side wall 25. This could be accomplished by applying heat and pressure to this region to form an impermeable side wall. Any sealing process could be used that causes the two layers of plastic material to bond together. The sealing should cause the plastic to melt and flow back together, thereby closing substantially all of the holes therein. If the top and bottom layers are made from identical sheets of plastic material having the same size holes and density of holes the flow rates could be adjusted by applying heat and pressure to the bottom layer to close up some of the holes. This reduces the size of the outlet orifice and thereby reduces the flow rate therethrough.

It has been found that for the plastic films described above, a hole size ranging from 0.1 mm to 0.254 mm (4 mils to 10 mils) is ideal for retaining dry coffee sediment in the brewing chamber. Approximately 40-100 holes, regularly arrayed and spaced, for this size-range per square inch of material is ideal for obtaining the good water flow characteristics. In addition, surfactants can be applied to the plastic films to aid in water flow. The surfactants can be applied to the surface or incorporated within the material. Suitable surfactants for application on the films surface would include polysorbates, polyglycerol esters and monoglyceride derivatives.

Still yet another embodiment of the present invention is shown in Figure 5. Figure 5 is a simplified cross-sectional view of coffee filter pack 101 of the present invention. Coffee filter pack 101 comprises bottom layer 110 made from porous filter paper, and top layer 120 made from a continuous film of plastic material, such as those described above. When sealing a continuously porous layer of coextruded plastic film to porous filter paper, it is preferred that most of the heat come from the paper side. This allows the sealant side of the film to flow into the paper creating a stronger bond, and aiding in closing the holes in the film.

It is preferred that when using a plastic film to make either or both layers of the coffee filter pack that the plastic material used be a two layer co-extruded plastic film wherein the sealant side of the film, the layer that is to be sealed to another layer, has a lower melting temperature than the outside surface in order to aid in sealing. Figure 5 shows the top layer 120 as being a co-extruded plastic film. Top layer 120 comprises two sub-layers 121 and 122. It is preferred that sub-layer 121 have a lower melting temperature than sub-layer 122. This difference in temperatures allows for higher sealing temperatures to be used while preventing the non-sealant side of plastic material from sticking to the sealing surface. Typical materials for sublayer 122 include polyolefins whereas typical materials for sub-layer 121 also include polyolefins but containing EVA's therein.

In a particularly preferred embodiment of the present invention the water permeable region 13 of the bottom layer in the brewing chamber 40 is generally located in the center of the brew chamber where the coffee is placed. A single continuous permeable area 13 is also generally preferred over a multiplicity of discrete porous areas to maximize consistent extraction of flavor solids from the roast and ground coffee 50 contained within the brew chamber 40.

EXEMPLARY EMBODIMENT OF THE PRESENT INVENTION

A filter pack of the type generally shown in Figures 1, 2 and 3 was constructed using a generally circular shaped piece of James River 0.033 kg/m² (20 lb/3000 ft²) basis weight porous filter paper having a 241.3 mm (9.5 inch) diameter as the bottom layer. National Starch & Chemical's 6931-107-1 hydrophobic adhesive was pattern coated on the bottom layer in the pattern generally shown in Figure 3 using a Graco Microprint screen coater and leaving an uncoated circular central area having a 117.5 mm (4.625 inch) diameter at the center of the bottom layer to act as the discharge flow outlet 13 for brewed coffee. A dose of 43.4 grams of 0.2 mm (8 mil) flaked roast and ground coffee containing approximately 4.5 percent moisture by weight and having a dry volume of approximately 136 cm³ (8.3 cubic inches) was placed in the center of the uncoated portion of the bottom layer.

A generally circular shaped piece of James River 0.033 kg/m² (20 lb/3000 ft²) basis weight porous filter paper with a 177.8 mm (7 inch) diameter was employed for the top layer. The top layer was concentrically centered with and heat sealed to the bottom layer to encapsulate the roast and ground coffee. The width of the seal extended radially inwardly from the outer perimeter of the top layer for a distance of 12.5 mm (1/2 inch). This resulted in a porous inlet area 23 to the brew chamber having a diameter of approximately 152.4 mm (6 inches).

The porosity of the filter paper used to make the top and bottom layers was approximately 300 milliliters of water/minute/6.45 cm² (in²). Since the area of the inlet was 182 cm² (28.3 in²), the maximum possible flow rate $F_2$ of hot water into the brew chamber was approximately 8.5 liters/minute. This flow rate is much greater than the flow rate $F_1$ at which most coffee makers deliver hot water to the filter pack. Therefore the actual flow rate $F_2$ will, in most instances, be equal to the flow rate $F_1$ delivered by the coffee maker to the coffee filter pack prior to establishing a steady state brewing condition in the brew chamber. Once a steady state brewing condition has been established within the brew chamber, flow rate $F_2$ will be substantially equal to the discharge flow rate $F_3$ of brewed coffee exiting the brew chamber.

Next, the filter pack was formed, as generally shown in Figures 4A, 4B, and 4C to take on the desired frusto-conical shape and a bottom diameter of approximately 114.3 mm (4.5 inches). The forming process used male and female dies, as generally shown in Figures 4A-4C. The filter pack was first centered over the female die 70. The male die 60 was then forced down into the female die, forming and folding the filter pack in such a way that it was sandwiched between the male and female dies. Hot air at 93.3°C (200°F) was blown onto the filter pack side wall 25 to soften the hydrophobic adhesive 30. The filter pack was then cooled for 5 to 10 seconds to allow the adhesive to set to the frusto-conical shape and removed by lifting up the male die 60 and shoving the filter pack through the bottom of the female die Figure 4C. The forming process caused the unsecured porous portion 23 of the top filter medium to "puff up" creating a maximum brew chamber volume of approximately 360.5 cm³ (22 cubic inches) (frusto-conical volume 114.3 mm (4.5") bottom diameter, 127 mm (5") top diameter, 31.75 mm (1.25") tall). This volume $V_3$ is approximately 165% greater than the volume $V_1$ of the dry roast and ground coffee contained therein.

Thirty nine exemplary coffee filter packs of the aforementioned type were brewed by four different cafeteria workers using a Bunn OL20 coffee maker having a porous filter support with a bottom diameter of approximately 114.3 mm (4.5) inches. The coffee maker delivered approximately 1,870 milliliters of water at 90.6°C (195°F) in approximately 2.5 minutes, thereby resulting in an incoming hot water delivery rate $F_1$ of approximately 748 milliliters/minute. The brew chamber of the filter pack was flooded and a steady state brewing condition established therein within the first 30 seconds of the brewing cycle. This occurred by the time no more than 20 percent of the total predetermined volume $V_2$ of water delivered to the filter pack had passed through the brew chamber.

The average flow rate $F_3$ of brewed coffee out of the brew chamber ranged from about 368 to about 425 milliliters/minute, never exceeding flow rates $F_1$ or $F_2$.

Samples of the final beverage were taken from all 39 pots of coffee brewed. The amount of extractable flavor solids in each sample was measured by weighing the coffee flavor solids remaining after evaporating the water in the samples.

Out of the 39 pots, the extraction efficiency levels averaged 0.315 grams of extracted coffee flavor solids/gram of dry coffee. The standard deviation for the 39 samples was 0.0074 grams of extracted coffee flavor solids/gram of dry coffee.

IDENTICAL QUANTITY OF BULK COFFEE BREWED UNDER IDENTICAL CONDITIONS USING A POROUS PAPER FILTER

In a second separate experiment, 43.4 grams of the same loose coffee used in the foregoing exemplary embodiment of the present invention were placed in a separate open and unconstrained filter. The coffee filter was purchased from the Bunn Corporation (Springfield, Illinois) and was reportedly made from James River 0.033 kg/m$^2$ (20 lb/3000 ft$_2$) porous paper shaped to fit the coffee filter holder of a Bunn OL20 coffee brewer (frusto-conical shape 114.3 mm (4.5") bottom dia., 152.4 mm (6") top dia., 66.7 mm (2.625") height). The Bunn coffee filter with the coffee in the bottom was then placed in the same filter holders and Bunn OL20 brewers used to test the exemplary embodiment of the present invention. Thirty five replicates were brewed by four different cafeteria workers. The average flow rate out of the filter holder ranged from about 420 to about 475 milliliters/minute.

Out of the thirty-five pots, the extraction efficiency was determined using the same method described above. It averaged 0.306 grams of extracted coffee flavor solids/gram of dry coffee with a standard deviation for the 35 samples of 0.0121 grams of extracted coffee flavor solids/gram of dry coffee.

FILTER PACK OF CONVENTIONAL PRIOR ART CONFIGURATION EMPLOYING IDENTICAL QUANTITY
OF COFFEE

In a third separate experiment, a conventional round coffee filter pack having a design generally similar to those frequently encountered in commerce was constructed containing 43.4 grams of the same coffee used in the previous two examples. Two circles 171.45 mm (6.75 inches) in diameter were cut from a web of porous heat sealable filter paper (#3968) obtained from the Dexter Corporation, Windsor Locks, Conn. (used in making most commercial filter packs). The circles were sealed together with the heat sealable sides on the inside. The seal was made such that there was a 142.9 mm (5.625 inch) diameter unsealed area centered within the 171.45 mm (6.75) inch diameter circles. Enclosed within the 142.9 mm (5.625 inch) diameter unsealed area was the 43.4 grams of coffee.

The product was brewed in the same Bunn OL20 coffee brewers used in the previous two examples. Thirty-nine replicates were brewed by four cafeteria workers. The average discharge flow rate out of the brewing chamber ranged between about 600 and about 690 milliliters/minute. Samples of the final beverage were taken from all 39 pots and extraction efficiencies were measured in the same manner as described previously. Out of the 39 pots, the extraction efficiency averaged 0.23 grams of extracted coffee flavor solids/gram of dry coffee with a standard deviation for the 39 samples of 0.054 grams of extracted coffee flavor solids/gram of dry coffee.

## SUMMARY OF THE FOREGOING EXEMPLARY EXTRACTION RESULTS

|  | Present Invention | Loose Coffee in Paper Filter | Flat Filter Pack of Conventional Round Configuration |
|---|---|---|---|
| Extraction Efficiency<br>grams of extracted flavor solids<br>gram of dry coffee | 0.315 | 0.306 | 0.23 |
| Std. Dev.<br>grams of extracted flavor solids<br>gram of dry coffee | 0.0074<br>(based on<br>39 samples) | 0.0121<br>(based on<br>35 samples) | 0.0542<br>(based on<br>39 samples) |

The foregoing exemplary data clearly demonstrate that the extraction efficiency of the exemplary coffee filter packs of the present invention not only met, but slightly exceeded that of the bulk coffee/filter paper

10

combination, while substantially exceeding that of the flat conventional round confirmation filter pack examples. Furthermore, the standard deviation for the exemplary filter packs of the present invention was approximately half that of the bulk coffee/fitter paper combination, and only about a fifth that of the conventional round filter pack examples. As will be understood by those skilled in the art, the lower standard deviation of the exemplary coffee packs of the present invention is indicative of more consistent brew strength from pot-to-pot.

While particular embodiments of the present invention have been illustrated and described, it would be obvious to those skilled in the art that various changes and modifications can be made. For example, the post fabrication forming step could be omitted, and the filter pack could remain substantially flat until insertion into the filter support means of the coffee maker. Because the substantially water impermeable side walls are flexible, insertion of the substantially flat filter support means will cause them to conform to the filter support means and assume an upwardly directed orientation sufficient to produce the desired brewing action. It is intended to cover in the appended claims, all such modifications that are within the scope of this invention.

## Claims

1. A conformable, high extraction efficiency coffee filter pack (1) containing a predetermined volume $V_1$ of dry roast and ground coffee (50) having extractable flavor solids therein, said coffee filter pack (1) being suitable for use in combination with a coffee maker having a porous means (75) for supporting said conformable filter pack (1) in an upwardly concave configuration and means for delivering a predetermined volume $V_2$ of hot water into said upwardly concave filter pack at a predetermined water delivery flow rate $F_1$ to produce a brewed coffee product of substantially consistent brew strength from one pot to the next, said coffee filter pack (1) having a bottom layer (10) comprised of a flexible material, said bottom layer (10) having inner and outer faces;

   a top layer (20) comprised of a flexible material, said top layer having inner and outer faces, said inner face of said top layer (20) being centered and continuously secured to said bottom layer (10) about said top layer's outer perimeter, thereby defining a brew chamber (40) between their centrally located non-joined areas, said brew chamber (40) containing said predetermined volume $V_1$ of roast and ground coffee (50), characterized in that:

   a) said brew chamber (40) having a maximum volume $V_3$ that is between about 25% and about 300% larger than the volume $V_1$ of said dry roast and ground coffee (50);

   (b) a conformable side wall defined by the portions of said top and bottom layers extending outwardly from the outer perimeter of said brew chamber (40), said conformable side wall being substantially impervious to the passage of water, said side wall, upon insertion into said support means (75) in said coffee maker, being substantially vertically oriented about its entire periphery so as to retain incoming hot water from the coffee maker therein, the vertical height of said substantially water impervious vertically extending side wall being at least sufficient to retain enough incoming hot water to totally immerse said brew chamber (40) when said brew chamber (40) is in its flooded and fully expanded condition;

   (c) a porous inlet orifice (23) in said top layer (20) of said brew chamber (40) to prevent the passage of roast and ground coffee (50) therethrough yet allow incoming hot water, which is retained by said substantially vertically oriented substantially water impervious side wall, to pass therethrough at a predetermined flow rate $F_2$ at least until a substantially steady state brewing condition is reached inside said brew chamber (40), and

   (d) a porous discharge outlet orifice (13) in said bottom layer (10) of said brew chamber (40) to prevent the passage of roast and ground coffee therethrough yet allow brewed coffee to pass therethrough at a predetermined maximum outlet flow rate $F_3$ once a steady state brewing condition is reached inside said brew chamber (40), said maximum outlet flow rate $F_3$ being less than said flow rate $F_1$ of said incoming hot water from said coffee maker and less than said inlet flow rate $F_2$ into said brew chamber (40), said inlet flow rate $F_2$ and said outlet flow rate $F_3$ being so related that a steady state brewing condition is established in said brew chamber (40) before no more than about 50 percent of said volume $V_2$ of incoming hot water has exited said brew chamber (40), and wherein said inlet flow rate $F_2$ of said porous inlet orifice (23) is between about 1.5 and about 2.0 times said maximum discharge flow rate $F_3$ of said porous discharge orifice (13).

2. A coffee filter pack according to Claim 1, wherein said substantially water impermeable side wall is preformed to cause said coffee filter pack to assume an upwardly concave configuration prior to

EP 0 592 544 B1

insertion of said coffee filter pack into said support means on said coffee maker.

3. A coffee filter pack according to Claim 1, wherein said bottom layer is comprised of porous filter paper coated with a hydrophobic polymeric material in all areas other than said discharge outlet in said bottom wall of said brew chamber to render said bottom layer substantially impermeable to water in all of the coated areas, and wherein said top layer is also comprised of porous filter paper and wherein said porous inlet orifice in said top layer of said brew chamber comprises the centrally located non-joined portion of said top layer.

4. A coffee filter pack according to Claim 1, wherein at least one of said bottom or said top layers is comprised of a plastic film wherein selected regions of said film have a multiplicity of apertures therein, said apertures being large enough to permit water to flow therethrough.

5. A coffee filter pack according to Claim 4, wherein said apertures in said film are small enough to substantially prevent the passage of particulate roast and ground coffee.

6. A coffee filter pack according to Claims 4 or 5 wherein both said top and said bottom layers are comprised of said plastic film.

7. A coffee filter pack according to Claims 4 or 5 wherein said top layer is comprised of said plastic film and said bottom layer is comprised of porous filter paper.

8. A coffee filter pack according to Claims 4 or 5 wherein said plastic film is treated with a surfactant.

9. A coffee filter pack according to Claims 4 or 5 wherein said plastic film is a coextruded plastic film having two layers, wherein one layer has a lower melting temperature than said other layer.

**Patentansprüche**

1. Eine anpaßbare Kaffeefilterpackung (1) mit hoher Extraktionseffizienz, welche ein festgelegtes Volumen ($V_1$) trocken gerösteten und gemahlenen Kaffees (50) mit extrahierbaren Geschmacksfeststoffen darin aufweist, wobei die genannte Kaffeefilterpackung (1) zur Verwendung in Kombination mit einem Kaffeeherstellungsgerät geeignet ist, das ein poröses Mittel (75) zum Tragen der genannten anpaßbaren Filterpackung (1) in einer aufwärts gerichteten konkaven Konfiguration und Mittel zum Abgeben eines festgelegten Volumens ($V_2$) heißen Wassers in die genannte aufwärts gerichtete konkave Filterpackung bei einem festgelegten Wasserabgabe-Durchsatz ($F_1$) aufweist, um ein gebrautes Kaffeeprodukt von im Wesentlichen konsistenter Braustärke von einer Tasse zur nächsten herzustellen, wobei die genannte Kaffeefilterpackung (1) umfaßt
eine untere Schichte (10), welche aus einem flexiblen Material besteht, wobei die genannte untere Schichte (10) innere und äußere Seiten aufweist;
eine obere Schichte (20), welche aus einem flexiblen Material besteht, wobei die genannte obere schichte innere und äußere Seiten aufweist, wobei die genannte innere Seite der genannten oberen Schichte (20) zentriert ist und um den äußeren Umfang der genannten oberen Schichte an der genannten unteren Schichte (10) kontinuierlich befestigt ist, wobei dadurch zwischen ihren zentral angeordneten nicht verbundenen Zonen eine Braukammer (40) definiert wird, wobei die genannte Braukammer (40) das genannte festgelegte Volumen ($V_1$) gerösteten und gemahlenen Kaffees (50) enthält, dadurch gekennzeichnet, daß:
a) die genannte Braukammer (40) ein Maximum-Volumen ($V_3$) aufweist, welches um zwischen etwa 25 % und etwa 300 % größer ist als das Volumen ($V_1$) des genannten trocken gerösteten und gemahlenen Kaffees (50);
b) wobei eine anpaßbare Seitenwandung von den Abschnitten der genannten oberen und der genannten unteren Schichte definiert ist, welche sich vom äußeren Umfang der genannten Braukammer (40) auswärts erstrecken, wobei die genannte anpaßbare Seitenwandung im Wesentlichen undurchlässig für den Durchgang von Wasser ist, wobei die genannte Seitenwandung, nach Einsetzen in das genannte Mittel (75) zum Tragen im genannten Kaffeeherstellungsgerät, um ihre gesamte Peripherie im Wesentlichen vertikal ausgerichtet ist, um so das vom Kaffeeherstellungsgerät hereinkommende heiße Wasser darin zurückzuhalten, wobei die vertikale Höhe der genannten im Wesentlichen wasserundurchlässigen sich vertikal erstreckenden Seitenwandung mindestens ausrei-

12

EP 0 592 544 B1

chend ist, um genügend hereinkommendes heißes Wasser zurückzuhalten, um die genannte Braukammer (40) gänzlich zu überfluten, wenn die genannte Braukammer (40) sich in ihrem gefluteten und vollständig expandierten Zustand befindet;

c) eine poröse Einlaßöffnung (23) in der genannten oberen Schichte (20) der genannten Braukammer (40), um den Durchgang gerösteten und gemahlenen Kaffees hindurch zu verhindern, jedoch hereinkommendem heißen Wasser, welches von der genannten im Wesentlichen vertikal ausgerichteten im Wesentlichen wasserundurchlässigen Seitenwandung zurückgehalten wird, zu gestatten, bei einem festgelegten Durchsatz ($F_2$) hindurchzugehen, mindestens bis innerhalb der genannten Braukammer (40) eine Braukondition von im Wesentlichen stabilem Zustand erreicht ist, und

d) eine poröse Abgabe-Auslaßöffnung (13) in der genannten unteren Schichte (10) der genannten Braukammer (40), um den Durchgang gerösteten und gemahlenen Kaffees hindurch zu verhindern, jedoch gebrautem Kaffee zu gestatten, bei einem festgelegten maximalen Auslaß-Durchsatz ($F_3$) hindurchzugehen, sobald als innerhalb der genannten Braukammer (40) eine Braukondition mit stabilem Zustand erreicht ist, wobei der genannte Maximum-Durchsatz ($F_3$) am Auslaß geringer als der genannte Durchsatz ($F_1$) des vom genannten Kaffeeherstellungsgerät hereinkommenden heißen Wassers und geringer als der genannte Einlaß-Durchsatz ($F_2$) in die genannte Braukammer (40) ist, wobei der genannte Einlaß-Durchsatz ($F_2$) und der genannte Auslaß-Durchsatz ($F_3$) so in Beziehung gebracht sind, daß sich in der genannten Braukammer (40) eine Braukondition von stabilem Zustand etabliert hat, bevor nicht mehr als etwa 50 % des genannten Volumens ($V_2$) des hereinkommenden heißen Wassers die genannte Braukammer (40) verlassen haben, und bei welcher der genannte Einlaß-Durchsatz ($F_2$) der genannten porösen Einlaßöffnung (23) zwischen dem etwa 1,5- und dem etwa 2,0-fachen des genannten Maximum-Abgabe-Durchsatzes ($F_3$) der genannten porösen Abgabe-öffnung (13) liegt.

2. Eine Kaffeefilterpackung nach Anspruch 1, bei welcher die genannte im Wesentlichen wasserundurchlässige Seitenwandung ausgeführt ist, um die genannte Kaffeefilterpackung zu veranlassen, vor dem Einsetzen der genannten Kaffeefilterpackung in die genannte Haltevorrichtung am genannten Kaffeeherstellungsgerät, eine aufwärts konkave Konfiguration anzunehmen.

3. Eine Kaffeefilterpackung nach Anspruch 1, bei welcher die genannte untere Schichte aus porösem Filterpapier besteht, welches in allen anderen Zonen als dem genannten Abgabeauslaß in der genannten Bodenwandung der genannten Braukammer mit einem hydrophoben polymeren Material beschichtet ist, um die genannte untere Schichte in allen beschichteten Zonen im wesentlichen undurchlässig für Wasser zu machen, und bei welcher die genannte obere Schichte ebenso aus porösem Filterpapier besteht und bei welcher die genannte poröse Einlaßöffnung in der genannten oberen Schichte der genannten Braukammer den zentral angeordneten nicht verbundenen Abschnitt der genannten oberen Schichte umfaßt.

4. Eine Kaffeefilterpackung nach Anspruch 1, bei welcher mindestens eine der genannten unteren oder der genannten oberen Schichte aus einer Kunststoffolie besteht, bei welcher ausgewählte Bereiche der genannten Folie eine Mehrzahl von Öffnungen darin aufweisen, wobei die genannten Öffnungen groß genug sind, um Wasser ein Durchfließen zu gestatten.

5. Eine Kaffeefilterpackung nach Anspruch 4, bei welcher die genannten Öffnungen in der genannten Folie klein genug sind, um im Wesentlichen den Durchgang von Teilchen gerösteten und gemahlenen Kaffees zu verhindern.

6. Eine Kaffeefilterpackung nach Anspruch 4 oder 5, bei welcher sowohl die genannte obere Schichte als auch die genannte untere Schichte aus der genannten Kunststoffolie bestehen.

7. Eine Kaffeefilterpackung nach Anspruch 4 oder 5, bei welcher die genannte obere Schichte aus der genannten Kunststoffolie besteht und die genannte untere Schichte aus porösem Filterpapier besteht.

8. Eine Kaffeefilterpackung nach Anspruch 4 oder 5, bei welcher die genannte Kunststoffolie mit einem Oberflächenveredelungsmittel behandelt ist.

9. Eine Kaffeefilterpackung nach Anspruch 4 oder 5, bei welcher die genannte Kunststoffolie eine coextrudierte Kunststoffolie mit zwei Schichten ist, wobei eine Schichte eine geringere Schmelztempa-

13

ratur als die genannte andere Schichte aufweist.

**Revendications**

1.  Filtre à café (1) à fort rendement d'extraction et pouvant être conformé, contenant un volume prédéterminé $V_1$ de café torréfié et moulu (50) ayant des arômes solides pouvant être extraits, ledit filtre à café (1) étant adapté à une utilisation en combinaison avec une machine à café ayant des moyens poreux (75) destinés à supporter ledit filtre pouvant être conformé (1) dans une configuration concave vers le haut et des moyens destinés à délivrer un volume prédéterminé $V_2$ d'eau chaude dans ledit filtre concave vers le haut avec un débit d'eau prédéterminé $F_1$ afin de produire un café infusé d'une force sensiblement constante d'un pot à l'autre, ledit filtre à café (1) ayant une couche inférieure (10) composée d'une matière flexible, ladite couche inférieure (10) ayant des faces intérieure et extérieure; une couche supérieure (20) composée d'une matière flexible, ladite couche supérieure ayant des faces intérieure et extérieure, ladite face intérieure de ladite couche supérieure (20) étant centrée et fixée de manière continue sur ladite couche inférieure (10) autour du périmètre extérieur de ladite couche supérieure, définissant ainsi une chambre d'infusion (40) entre leurs zones non reliées disposées de manière centrale, ladite chambre d'infusion (40) contenant ledit volume prédéterminé $V_1$ de café torréfié et moulu (50), caractérisé en ce que :

    (a) ladite chambre d'infusion (40) a un volume maximum $V_3$ qui est entre environ 25% et environ 300% plus grand que le volume $V_1$ dudit café torréfié et moulu (50);

    (b) une paroi latérale pouvant être conformée est définie par les parties desdites couches supérieure et inférieure s'étendant vers l'extérieur depuis le périmètre extérieur de ladite chambre d'infusion (40), ladite paroi latérale pouvant être conformée étant sensiblement imperméable au passage de l'eau, ladite paroi latérale, lors de l'insertion dans lesdits moyens de support (15) dans ladite machine à café, étant orientée sensiblement verticalement autour de sa périphérie complète de façon à retenir l'eau chaude qui entre en provenance de la machine à café, la hauteur verticale de ladite paroi latérale s'étendant verticalement sensiblement imperméable à l'eau étant au moins suffisante pour retenir suffisamment d'eau chaude qui entre pour immerger totalement ladite chambre d'infusion (40) lorsque ladite chambre d'infusion (40) est dans son état totalement étendu et noyé;

    (c) un orifice d'entrée poreux (23) dans ladite couche supérieure (20) de ladite chambre d'infusion (40) est destiné à empêcher le passage de café torréfié et moulu (50) tout en permettant à l'eau chaude qui entre, qui est retenue par ladite paroi latérale sensiblement imperméable à l'eau orientée sensiblement verticalement, de passer à travers avec un débit prédéterminé $F_2$ au moins jusqu'à ce qu'un état d'infusion sensiblement stabilisé soit atteint à l'intérieur de ladite chambre d'infusion (40); et

    (d) un orifice de sortie d'évacuation poreux (13) dans ladite couche inférieure (10) de ladite chambre d'infusion (40) est destiné à empêcher le passage de café torréfié et moulu tout en permettant au café infusé de passer à travers à un débit de sortie maximum prédéterminé $F_3$ une fois qu'un état d'infusion sensiblement stabilisé est atteint à l'intérieur de ladite chambre d'infusion (40), ledit débit de sortie maximum $F_3$ étant inférieur audit débit $F_1$ de ladite eau chaude qui entre en provenance de ladite machine à café et inférieur audit débit d'entrée $F_2$ dans ladite chambre d'infusion (40), ledit débit d'entrée $F_2$ et ledit débit de sortie $F_3$ étant liés de telle sorte qu'un état d'infusion stabilisé est établi dans ladite chambre d'infusion (40) avant que pas plus de 50 pourcent dudit volume $V_2$ d'eau chaude qui entre soient sortis de ladite chambre d'infusion (40) et ledit débit d'entrée $F_2$ dudit orifice d'entrée poreux (23) étant entre environ 1,5 et environ 2 fois ledit débit de sortie maximum $F_3$ dudit orifice d'entrée poreux (23).

2.  Filtre à café selon la revendication 1, dans lequel ladite paroi latérale sensiblement imperméable à l'eau est préformée afin d'amener ledit filtre à café à prendre une configuration concave vers le haut avant l'insertion dudit filtre à café dans lesdits moyens de support sur ladite machine à café.

3.  Filtre à café selon la revendication 1, dans lequel ladite couche inférieure se compose d'un papier-filtre poreux revêtu d'une matière polymère hydrophobe dans toutes les zones autres que ladite sortie d'évacuation dans ladite paroi inférieure de ladite chambre d'infusion afin de rendre ladite couche inférieure sensiblement imperméable à l'eau dans toutes les zones revêtues, et dans lequel ladite couche supérieure se compose également d'un papier-filtre poreux et dans lequel ledit orifice d'entrée poreux dans ladite couche supérieure de ladite chambre d'infusion comporte la partie non reliée disposée de manière centrale de ladite couche supérieure.

4. Filtre à café selon la revendication 1, dans lequel au moins une desdites couches supérieure ou inférieure se compose d'un film plastique, des zones choisies dudit film ayant une multiplicité d'ouvertures, lesdites ouvertures étant suffisamment grandes pour permettre à l'eau de s'écouler à travers.

5. Filtre à café selon la revendication 4, dans lequel lesdites ouvertures dans ledit film sont suffisamment petites pour empêcher de manière substantielle le passage de particules de café torréfié et moulu.

6. Filtre à café selon la revendication 4 ou 5, dans lequel lesdites couches supérieure et inférieure se composent toutes deux dudit film plastique.

7. Filtre à café selon la revendication 4 ou 5, dans lequel ladite couche supérieure se compose dudit film plastique et ladite couche inférieure se compose de papier-filtre poreux.

8. Filtre à café selon la revendication 4 ou 5, dans lequel ledit film plastique est traité avec un tensioactif.

9. Filtre à café selon la revendication 4 ou 5, dans lequel ledit film plastique est un film plastique coextrudé ayant deux couches, une couche ayant une température de fusion inférieure à ladite autre couche.

Fig. 1

Fig. 2

Fig. 2A

Fig. 3

Fig. 4A

Fig. 4B

Fig. 4C